# EUROPÄISCHE PATENTSCHRIFT

(11) **EP 2 462 002 B1**
(45) Veröffentlichungstag und Bekanntmachung des Hinweises auf die Patenterteilung: **28.09.2016**
(21) Anmeldenummer: 10744871.4
(22) Anmeldetag: 30.07.2010
(51) Int. Cl.: B60N 2/20, B60N 2/22, B60N 2/235

(54) **KRAFTFAHRZEUGSITZ UND VERFAHREN ZUR ÜBERFÜHRUNG EINER RÜCKENLEHNE VON DER GEBRAUCHS- IN EINE VERSTAUPOSITION**
MOTOR VEHICLE SEAT AND METHOD FOR TRANSFERRING A SEATBACK FROM THE USE POSITION TO A STOWED POSITION
SIÈGE DE VÉHICULE AUTOMOBILE ET PROCÉDÉ POUR LE TRANSFERT D'UN DOSSIER DE LA POSITION D'UTILISATION DANS UNE POSITION DE FIXATION

(30) Priorität: 05.08.2009 DE 102009036138; 15.06.2010 DE 102010023765
(43) Veröffentlichungstag der Anmeldung: 13.06.2012
(73) Patentinhaber: Johnson Controls GmbH, 51399 Burscheid (DE)
(72) Erfinder: FAHL, Michael, 51491 Overath (DE); EWALD, Tobias, 42499 Hückeswagen (DE)
(74) Vertreter: Wolff, Felix
(86) Internationale Anmeldenummer: PCT/EP2010/004667
(87) Internationale Veröffentlichungsnummer: WO 2011/015315

(56) Entgegenhaltungen:
- DE-A1- 10 226 586
- FR-A1- 2 899 161
- US-A- 1 663 898
- US-B1- 6 464 299

## Beschreibung

Die Erfindung betrifft einen Kraftfahrzeugsitz, insbesondere einen Rücksitz für hintere Sitzreihen von Kraftfahrzeugen. Des weiteren betrifft die Erfindung ein Verfahren zur Verlagerung von einem ersten und einem zweiten Bauteilen relativ zu einem Basisteil, wobei das erste und das zweite Bauteil durch eine erstes Drehmittel und das zweite Bauteil und das Basisteil durch ein zweites Drehmittel jeweils miteinander verbunden sind.

Kraftfahrzeugsitze, die zur Gewinnung von zusätzlichem Laderaum klappbar ausgeführt sind, sind in zahlreichen Ausgestaltungen am Markt vorhanden.

Aus der US6464299 sind ein Fahrzeugsitz und ein Verfahren zur Verlagerung des Fahrzeugsitzes mit den Merkmalen des Oberbegriffs des Anspruchs 11 bzw. des Anspruchs 1 bekannt.

Der Erfindung liegt die Aufgabe zugrunde, ein Verfahren zum Umklappen einer Rückenlehne von der Gebrauchs- in die Verstaustellung und einen neuen, klappbaren Fahrzeugsitz vorzuschlagen, wobei der Fahrzeugsitz einfach aufgebaut und ohne wesentliche Vorkenntnisse des Nutzers zu bedienen ist und er im zusammengeklappten Zustand einen geringen Platzbedarf beansprucht.

Gelöst wird die Aufgabe mit einem Verfahren gemäß Anspruch 1.

Das erfindungsgemäße Verfahren betrifft erfindungsgemäß die Verlagerung von einer Rückenlehne, dem ersten Bauteil, relativ zu einem Sitzteil, dem Basisteil, von einer Gebrauchsstellung, bei der die Rückenlehne im wesentlichen senkrecht zum Sitzteil vorgesehen ist, vorzugsweise über eine sogenannte, dem Fachmann geläufige Easy-Entry-Stellung, in eine Verstaustellung, in der die Rückenlehne im Wesentlichen parallel zu dem Sitzteil vorgesehen ist.

Zwischen dem ersten Bauteil, nämlich der Rückenlehne, und dem Basisteil, nämlich dem Sitzteil, ist ein zweites Bauteil vorgesehen, das sowohl mit dem ersten Bauteil als auch mit dem Basisteil bewegbar, insbesondere drehbar, verbunden ist. Dafür sind erste und zweite Drehmittel, insbesondere Drehachsen vorgesehen, die vorzugsweise parallel zueinander angeordnet sind.

Erfindungsgemäß ist nun vorgesehen, dass das erste und zweite Drehmittel in Abhängigkeit von mindestens einer Stellung des ersten Bauteils relativ zu dem zweiten Bauteil und/oder zweiten Bauteils relativ zu dem Basisteil automatisch ver- und entriegelt werden. Dadurch kann der Benutzer durch einfaches Drehen der Rückenlehne den Sitz von der Gebrauchsins die Verstaustellung überführen, ohne dass irgendwelche anderen Aktionen, wie beispielsweise Drücken von Knöpfen, Ziehen von Hebeln oder dergleichen vonnöten wäre.

Erfindungsgemäß kann das erste Bauteil, nämlich die Rückenlehne, relativ zu dem zweiten Bauteil verlagert, insbesondere um einen Winkel gedreht werden, wobei das zweite Bauteil relativ zu dem Basisteil, beispielsweise dem Sitzteil, in einer ersten Position verriegelt bleibt. Diese Funktion ist insbesondere zur Komfortverstellung wichtig. Der Anstellwinkel der Rückenlehne kann um seine senkrechte Stellung herum verstellt werden, ohne dass die Verriegelung zwischen dem zweiten Bauteil und dem Sitzteil gelöst wird.

Bei einer Drehung des ersten Bauteils, nämlich die Rückenlehne, über einen bestimmten Winkel hinaus, wird das zweite Drehmittel automatisch entriegelt und/oder das erste Bauteil mit einem an dem zweiten Bauteil vorgesehenen Anschlag zur Anlage gebracht wird. Diese Funktion ermöglicht es die Rückenlehne in eine Easy-Entry-Stellung zu überführen.

Vorzugsweis wird bei einer, insbesondere weiteren, Relativbewegung zwischen dem zweiten Bauteil und dem Basisteil, ein Verriegelungsmittel des ersten Bauteils automatisch in eine verriegelbare Position gebracht, d.h. das Verriegelungsmittel könnte das erste Bauteil relativ zu dem zweiten Bauteil verriegeln, hat aber noch nicht verriegelt.

Vorzugsweise wird ein Verriegelungsmittel des zweiten Bauteils relativ zu dem Basisteil ebenfalls, vorzugsweise gleichzeitig mit dem Verriegelungsmittel des ersten Bauteils, automatisch in eine verriegelbare, zweite Position gebracht wird, d.h. auch dieses Verriegelungsmittel könnte das zweite Bauteil relativ zu dem Basisteil verriegeln, hat aber noch nicht verriegelt.

Vorzugsweise werden beide Baufeile automatisch in ihrer jeweiligen Position verriegelt, nachdem das Bauteil seine Endposition erreicht hat. Diese Stellung ist dann beispielsweise die Verstaustellung der Rückenlehne parallel zu dem Sitzteil.

Vorzugsweise erfolgt die Verriegelung durch ein Rastmittel, insbesondere eine Rastklinke.

Vorzugsweise muss das zweite Bauteil, insbesondere nachdem es in seine zweite Position, beispielsweise die Verstauposition der Rückenlehne verbracht worden ist, manuell oder motorisch entriegelt werden.

Vorzugsweise erfolgt dann bei der Bewegung des Bauteils und des Basisteils relativ zueinander, die Entriegelung des ersten Bauteils automatisch.

In einer bevorzugten Ausführungsform der vorliegenden Erfindung wird bei einer Bewegung des ersten Bauteils und des zweiten Bauteils relativ zueinander und/oder bei einer Bewegung des zweiten Bauteils relativ zu dem Basisteil das erste Bauteil automatisch verkürzt oder verlängert.

Vorzugsweise ist das erste Bauteil die Rückenlehne und/oder das Basisteil der Sitzteil eines Fahrzeugsitzes.

Ein weiterer Gegenstand ist ein Fahrzeugsitz gemäß Anspruch 11. Besonders bevorzugt bewegt sich dieses Mittel rein translatorisch. Die zu dem erfindungsgemäßen Verfahren gemachten Ausführungen gelten für den erfindungsgemäßen Fahrzeugsitz gleichermaßen und umgekehrt.

Vorzugsweise weist der Fahrzeugsitz einen, um eine obere horizontale Drehachse schwenkbaren, oberen Beschlag auf, mit dem in der Regel die Rückenlehne verbunden ist und der über einen oberen Verriegelungsmechanismus lösbar vorriegelbar ist. Der Fahrzeugsitz weist ferner ein zweites Bauteil, ein Zwischenteil, auf, das vorzugsweise um eine untere horizontale Achse schwenkbar an einem unteren Beschlag angelenkt ist und vorzugsweise über einen unteren Verriegelungsmechanismus lösbar verriegelbar ist. Der unter Beschlag ist in der Regel mit einem Sitzteil verbunden.

Die Kinematik dieses Fahrzeugsitzes ist vorzugsweise derart ausgeführt, dass
- die obere Drehachse entriegelt und die untere Drehachse verriegelt ist, wenn sich die Rückenlehne in einer Gebrauchsstellung, d.h. in einer für den Fahrzeuginsassen zum Fahren günstigen Lage befindet;
- die untere Drehachse selbsttätig entriegelt wird, sobald die Rückenlehne beim Vorklappen einen vorbestimmten Neigungswinkel gegenüber der Senkrechten erreicht;
- die Vorklappbewegung der Rückenlehne durch erste Stopmittel, insbesondere in der dem vorbestimmten Neigungswinkel entsprechenden Stopstellung der Rückenlehne begrenzt wird;
- nach der Entriegelung der unteren Drehachse, bei fortgesetzter Bewegung des oberen Beschlages, die Bewegung des oberen Beschlages auf das Zwischenteil übertragen, die Bewegung des Zwischenteil durch ein zweites Stopmittel begrenzt, und dadurch das Zwischenteil in einer definierten funktionalen Stellung gestoppt wird und/oder
- die obere und die untere Drehachse jeweils erst dann verriegelt werden, wenn der erfindungsgemäße Fahrzeugsitz in eine Endposition verstellt ist, in der die Rückenlehne in einer flachen Stellung über dem Sitzteil angeordnet ist; - die obere und die untere Drehachse in der Endposition des Sitzes nur durch eine irgendwie geartete, auf die Kinematik einwirkende, gezielte Betätigung seitens eines Nutzers entriegelt werden kann.

Im Folgenden werden die Erfindungen anhand der Figuren 1 - 20 erläutert. Diese Erläuterungen sind lediglich beispielhaft und schränken den allgemeinen Erfindungsgedanken nicht ein. Die Erläuterungen gelten für beide Erfindungsgegenstände gleichermaßen.

Es zeigen:
- **Figur 1**: Komponenten der erfindungsgemäß ausgeführten Kinematik des Fahrzeugsitzes, in schematischer Explosionsdarstellung;
- **Figur 2**: eine Basisstruktur des Fahrzeugsitzes in einer ersten Stellung, der Gebrauchsstellung, in schematischer Schnittdarstellung;
- **Figur 3**: einen Fahrzeugsitz in einer der in Figur 2 gezeigten Gebrauchsstellung der Basisstruktur entsprechenden SitzGebrauchsstellung, in stark schematisierter Darstellung;
- **Figur 4**: die Basisstruktur von Figur 2 mit gegenüber der Figur 2 leicht nach vorne geklapptem Lehnenbeschlag;
- **Figur 5**: den Fahrzeugsitz in einer der in Figur 4 gezeigten Stellung der Basisstruktur entsprechenden Sitzstelllung, in stark schematisierter Darstellung;
- **Figur 6**: die Basisstruktur von Figur 4 mit in die aufrechte Stellung weiter vorgeklapptem Lehnenbeschlag;
- **Figur 7**: der Fahrzeugsitz in einer der in Figur 6 gezeigten Stellung-der Basisstruktur entsprechenden Sitzstelllung, in stark schematisierter Darstellung;
- **Figur 8**: die Basisstruktur von Figur 6 mit noch weiter vorgeklapptem Lehnenbeschlag;
- **Figur 9**: den Fahrzeugsitz in einer der in Figur 8 gezeigten Stellung der Basisstruktur entsprechenden Sitzstelllung, in stark schematisierter Darstellung;
- **Figur 10**: die Basisstruktur von Figur 8 mit noch weiter vorgeklapptem Lehnenbeschlag;
- **Figur 11**: den Fahrzeugsitz in einer der in Figur 10 gezeigten Stellung der Basisstruktur entsprechenden Sitzstelllung, in stark schematisierter Darstellung;
- **Figur 12**: die Basisstruktur von Fig.10 mit noch weiter vorgeklapptem Lehnenbeschlag;
- **Figur 13**: den Fahrzeugsitz in einer der in Figur 12 gezeigten Stellung der Basisstruktur entsprechenden Sitzstellung, in stark schematisierter Darstellung;
- **Figur 14**: die Basisstruktur von Fig. 12 mit noch weiter vorgeklapptem Lehnenbeschlag;
- **Figur 15**: den Fahrzeugsitz in einer der in Figur' 14, gezeigten Stellung der Basisstruktur entsprechenden Sitzstellung, in stark schematisierter Darstellung;
- **Figur 16**: die Basisstruktur von Fig. 14 mit noch weiter vorgeklapptem Lehnenbeschlag;
- **Figur 17**: den Fahrzeugsitz in einer der in Figur 16 gezeigten Stellung der Basisstruktur entsprechenden Sitzstellung, in stark schematisierter Darstellung;
- **Figur 18**: die Basisstruktur von Fig.16 mit in die waagerechte Endstellung weiter vorgeklapptem Lehnenbeschlag;
- **Figur 19**: den Fahrzeugsitz in einer der in Figur 18 gezeigten Endstellung der Basisstruktur entsprechenden Sitzendstellung, in stark schematisierter Darstellung;
- **Figur 20**: **zeigt die Verlängerung und Verkürzung der Rückenlehne;**

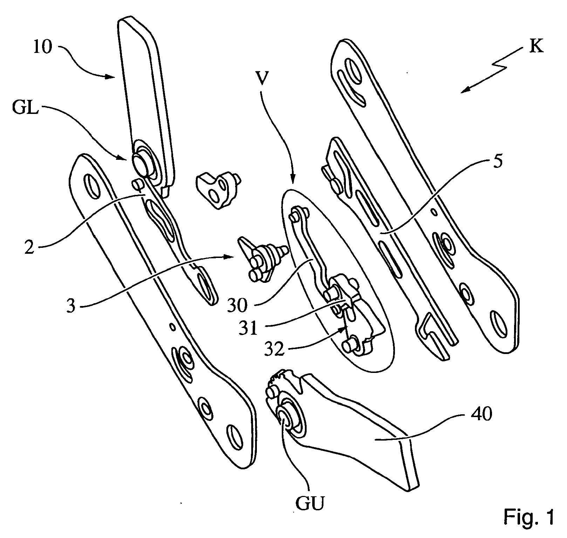

**Figur 1** zeigt Komponenten der erfindungsgemäß ausgeführten Kinematik K des Fahrzeugsitzes, in schematischer Explosionsdarstellung. Die Kinematik K umfasst ein Lehnenschwenkgelenk GL für eine Drehung des mit der Rückenlehne mitrotierenden Lehnenbeschlags 10 um eine obere Drehachse.

Das Lehnenschwenkgelenk GL ist mit einem Zugarm 2 mechanisch so gekoppelt, dass eine Drehbewegung des Lehnenschwenkgelenks GL auf den Zugarm 2 übertragbar ist.

Die Kinematik K umfasst ferner ein Löseorgan 3, das über den Zugarm 2.mit dem Lehnenschwenkgelenk GL in Wirkverbindung steht.

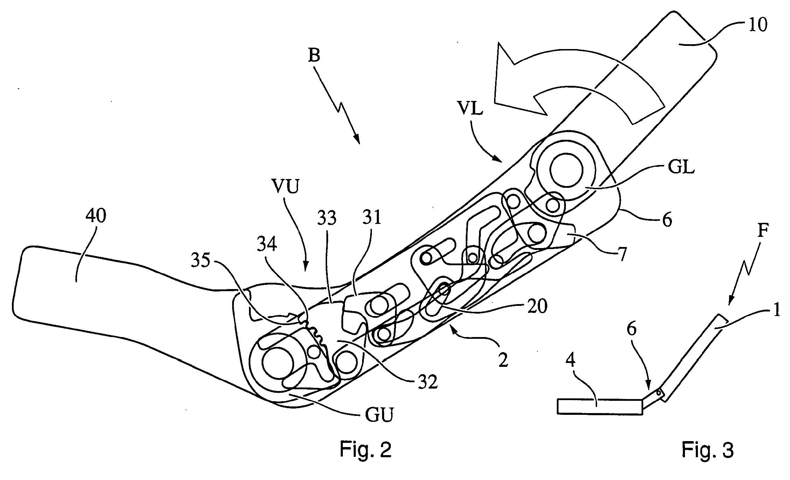

Ein unteres Schwenkgelenk GU ist drehfest mit einem bezüglich der Fahrzeugkarosserie feststehenden unteren Beschlag 40 verbunden, an dem ein z.B. in Figur 3 dargestelltes Sitzteil 4 gelagert ist.

Die Kinematik K weist ferner eine untere Verriegelungseinheit VU zur lösbaren Verriegelung des unteren Schwenkgelenks GU auf. Die Verriegelungseinheit VU umfasst ihrerseits einen Lösearm 30, einen Sperrnocken 31 und eine Sperrklaue 32. Mit einer oberen Verriegelungseinheit VL kann der Beschlag 10 und damit die Rückenlehne relativ zu dem Zwischenteil

Eine Gleitstrebe 5 ist mit einem Führungsschlitz versehen, der der Führung des Lösearms 30 dient.

**Figur 2** zeigt in schematischer Schnittdarstellung die Basisstruktur B des Fahrzeugsitzes F in einer für den Fahrzeuginsassen zum Fahren günstigen Gebrauchsstellung. Die Basisstruktur B umfasst den Lehnenbeschlag 10, der über das Lehnenschwenkgelenk GL gelenkig mit einem Zwischenteil 6 verbunden ist. Das Zwischenteil 6 ist über das untere Schwenkgelenk GU, um eine untere Drehachse drehbar am unteren Beschlag 40 angelenkt.

Die Basisstruktur B weist eine obere Verriegelungseinrichtung zur lösbaren Verriegelung des Lehnenschwenkgelenkes GL und eine untere Verriegelungseinrichtung V zur lösbaren Verriegelung des unteren Schwenkgelenks GU auf.

Das Lehnenschwenkgelenk GL ist in dieser für einen Fahrzeuginsassen zum Fahren günstigen Gebrauchsstellung der Basisstruktur B entriegelt, während das untere Schwenkgelenk GU verriegelt ist. Die Rückenlehne kann folglich für die Komfortverstellung in ihrem Neigungswinkel α verändert werden.

Ein Steuerschlitz 20 im Zugarm 2 dient der beweglichen Führung des Löseorgans und erlaubt dadurch letztlich das Verschwenken des Lehnenbeschlags 10 innerhalb eines bestimmten Schwenkbereiches für die Komfortverstellung der Rückenlehne 1, ohne dass bei dieser Komfortverstellung auf die obere Verriegelungseinrichtung oder auf die untere Verriegelungseinrichtung V eingewirkt wird. Der Sperrnocken 31 liegt an einer Anschlagnase 33 der Sperrklaue 32 an und hält die Sperrklaue 32 dadurch in einer Position, in der eine an der Sperrklaue 32 vorgesehen erste Verzahnung 34 mit einer mit dem unteren Schwenkgelenk GU wirkverbundenen zweiten Verzahnung 35 zusammenwirkt, um so letztlich das untere Schwenkgelenk GU zu verriegeln.

**Figur 3** zeigt in stark schematisierter Darstellung einen Fahrzeugsitz F in einer SitzGebrauchsstellung, die der in Figur 2 gezeigten Gebrauchsstellung der Basisstruktur B entspricht. Der Fahrzeugsitz F weist ein Sitzteil 4 und die über das Zwischenteil 6 mit dem Sitzteil 4 verbundene Rückenlehne 1 auf, die mit dem Lehnenbeschlag 10 mitrotiert.

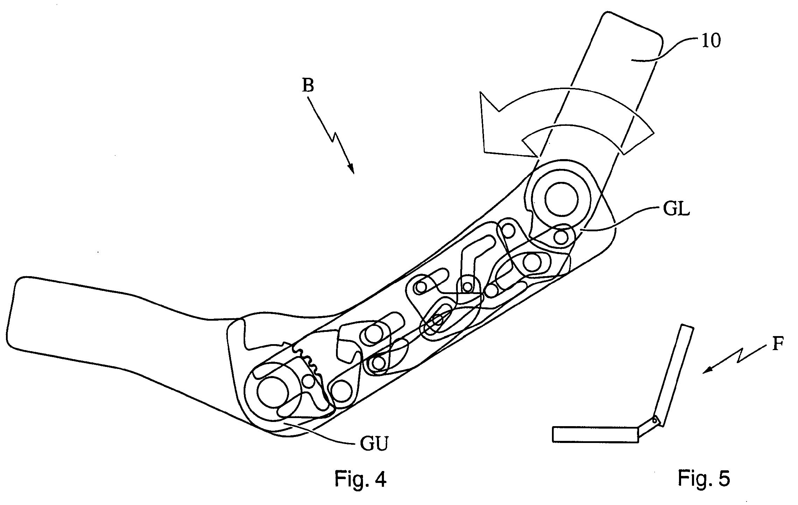

**Figur 4** zeigt die Basisstruktur B von Figur 2 mit gegenüber der Figur 2 leicht, um den Neigungswinkel α nach vorne geklapptem Lehnenbeschlag 10. Das Lehnenschwenkgelenk GL ist nach wie vor entriegelt, während das untere Schwenkgelenk GU noch immer verriegelt ist.

**Figur 5** zeigt in stark schematisierter Darstellung den Fahrzeugsitz F in einer Sitzstellung, die der in Figur 4 gezeigten Stellung der Basisstruktur B entspricht.

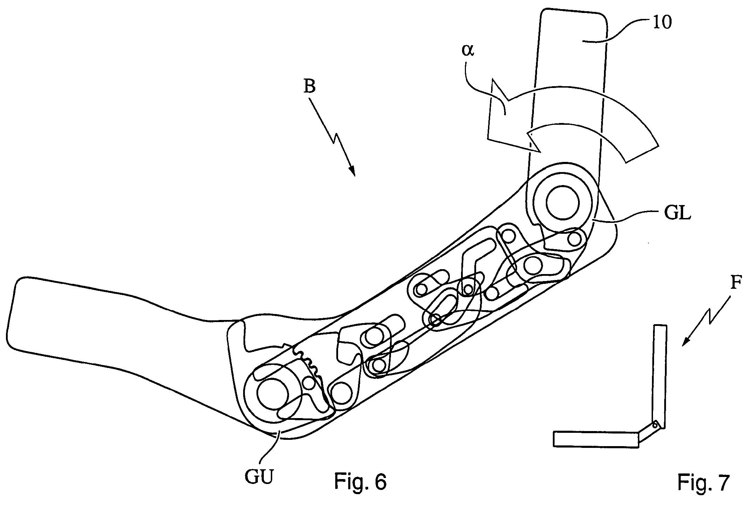

**Figur 6** zeigt die Basisstruktur B von Fig.4 mit weiter (größerer Neigungswinkel α) vorgeklapptem Lehnenbeschlag 10. Das Lehnenschwenkgelenk GL ist nach wie vor entriegelt, während das untere Schwenkgelenk GU noch immer verriegelt ist.

**Figur 7** zeigt in stark schematisierter Darstellung den Fahrzeugsitz F in einer Sitzstellung, die der in Figur 6 gezeigten Stellung der Basisstruktur B entspricht.

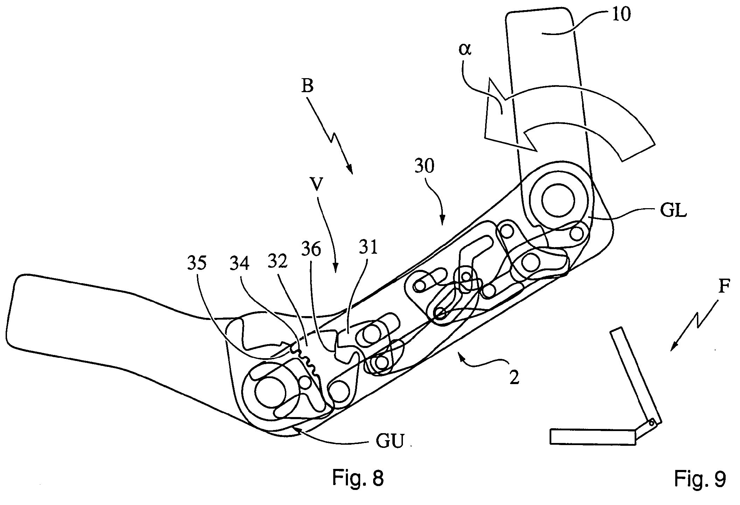

**Figur 8** zeigt die Basisstruktur B von Figur 6 mit noch weiter (noch größerer Neigungswinkel α) vorgeklapptem Lehnenbeschlag 10. Von dieser Stellung des Lehnenbeschlags 10 an greift der mit der Lehnenschwenkgelenk GL in Wirkverbindung stehende Zugarm 2 am Löseorgan an, das seinerseits einen am Lösearm 30 vorgesehenen Stift in den Führungsschlitz der Gleiterstrebe drückt. In der Folge beginnt der Lösearm 30 auf die untere Verriegelungseinrichtung V derart einzuwirken, dass der Sperrnocken 31 in eine an der Sperrklaue 32 vorgesehene Sperrvertiefung 36 eintaucht, woraufhin die Sperrklaue 32 nach hinten, vom unteren Schwenkgelenk GU weg, zurückweichen kann, und damit die erste Verzahnung 34 beginnt, sich aus dem Wirkungsbereich der zweiten Verzahnung 35 zu entfernen, um dadurch das untere Schwenkgelenk GU vom verriegelten Zustand in den entriegelten Zustand zu überführen.

**Figur 9** zeigt den Fahrzeugsitz F in einer der in Figur 8 gezeigten Stellung der Basisstruktur B entsprechenden Sitzstellung, in stark schematisierter Darstellung.

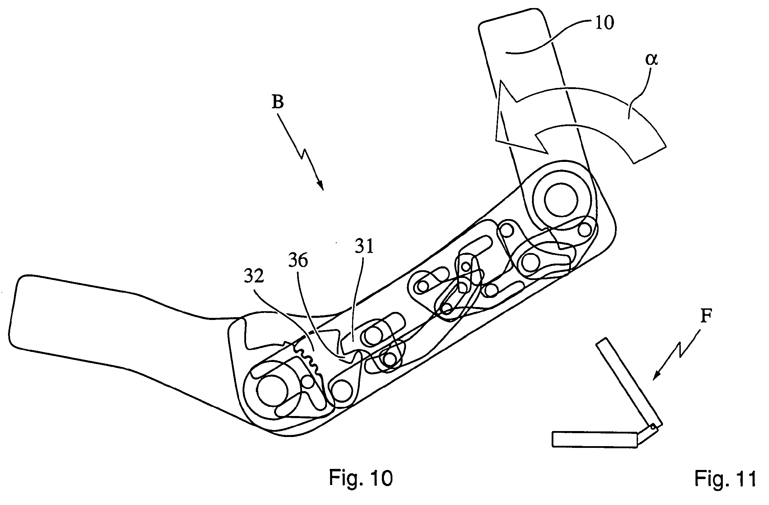

**Figur 10** zeigt die Basisstruktur B von Figur 8 mit noch weiter (nochmal größerer Neigungswinkel α) vorgeklapptem Lehnenbeschlag 10. Der Sperrnocken 31 ist noch tiefer in die Sperrvertiefung 36 eingedrungen, wodurch die Sperrklaue 32 noch weiter nach hinten zurückweichen konnte.

**Figur 11** zeigt den Fahrzeugsitz F in einer der in Figur 10 gezeigten Stellung der Basisstruktur B entsprechenden Sitzsteilung, in stark schematisierter Darstellung.

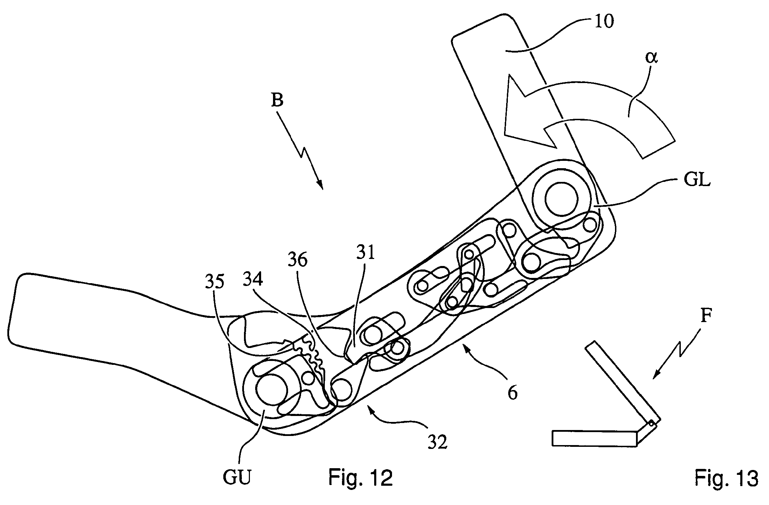

**Figur 12** zeigt die Basisstruktur B von Figur 10 mit noch weiter (noch größerer Neigungswinkel α) vorgeklapptem Lehnenbeschlag 10. Der Sperrnocken 31 ist nun vollständig in die Sperrvertiefung 36 eingetaucht, so dass die Sperrklaue 32 so weit nach hinten zurückweichen konnte, dass die erste Verzahnung 34 und die zweite Verzahnung 35 jetzt außer Eingriff miteinander sind und damit das untere Schwenkgelenk GU entriegelt ist. Das Lehnenschwenkgelenk GL wird zwar noch von einem Gleiter im entriegelten Zustand gehalten, jedoch befindet sich der Lehnenbeschlag 10 nun in einer verrieglungsbereiten Position Ready-to-Lock-Position). Nach der Entriegelung des unteren Schwenkgelenk GU dreht sich das Zwischenteil 6 mit dem Lehnenbeschlag 10 um die untere Drehachse.

**Figur 13** zeigt in stark schematisierter Darstellung den Fahrzeugsitz F in einer Sitzstellung, die der in Figur 12 gezeigten Stellung der Basisstruktur B entspricht.

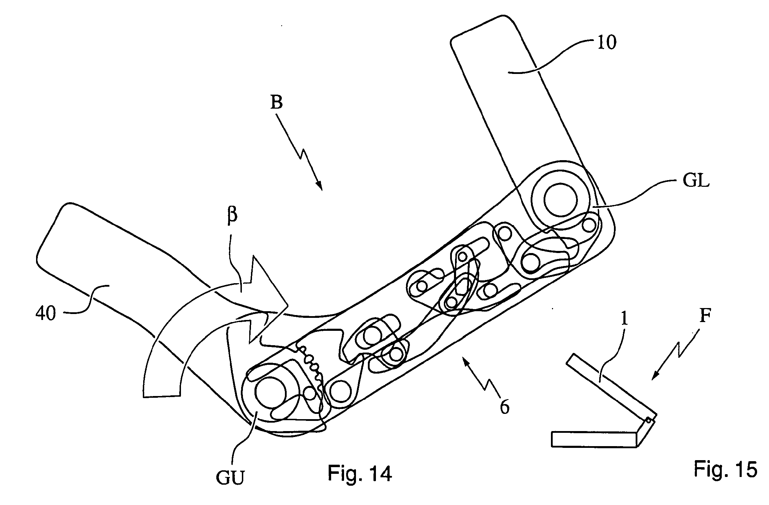

**Figur 14** zeigt die Basisstruktur B von Fig.12 mit noch weiter (noch größerer Neigungswinkel α) vorgeklapptem Lehnenbeschlag 10. Das untere Schwenkgelenk GU bleibt zunächst noch im entriegelten Zustand, bis es bei fortgesetzter Lehnenbewegung in eine zweite Verriegelungsposition (Veränderung des Winkels β) überführt wird. Vor dem Erreichen dieser zweiten Verriegelungsposition wird jedoch zum einen die untere Verriegelungseinrichtung V zunächst infolge der Lehnenbewegung in eine Ready-to-Lock-Position gebracht und zum anderen die Drehung des Zwischenteils 6 um die untere Drehachse durch einen zweiten Stopanschlag begrenzt. Dabei ist die Kinematik K so ausgelegt, dass das Lehnenschwenkgelenk GL und das untere Schwenkgelenk GU durch die ihnen jeweils zugeordneten Verriegelungseinrichtungen erst nach Erreichen des zweiten Stopanschlags selbsttätig verriegelt werden. Der an die Relativbewegung des unteren Beschlags 40 bezüglich des Zwischenteils gekoppelte Gleiter wird zurückbewegt, woraufhin das Lehnenschwenkgelenk GL beginnt, sich in eine verriegelte Position zu drehen. Der Lehnenbeschlag 10 befindet sich nun in Anlage mit einem ersten Stopanschlag, so dass eine weitere Bewegung des Lehnenbeschlags 10 und damit der Lehne 1 nach vorne blockiert ist.

**Figur 15** zeigt in stark schematisierter Darstellung den Fahrzeugsitz F in einer Sitzstellung, die der in Figur 14 gezeigten Stellung der Basisstruktur B entspricht.

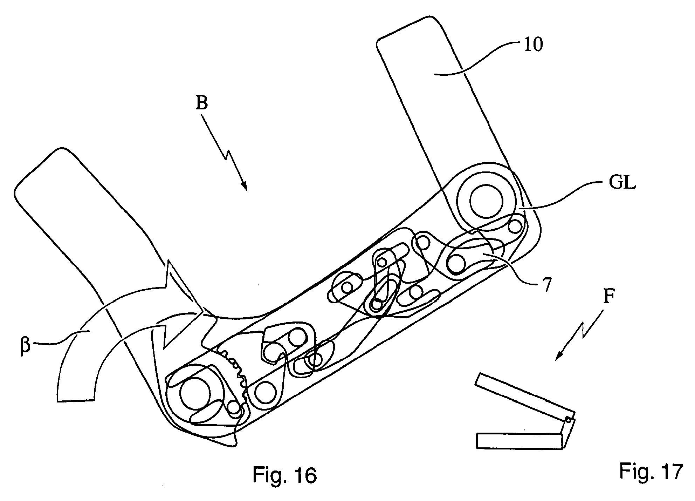

**Figur 16** zeigt die Basisstruktur B von Fig. 14 mit noch weiter (noch größerer Neigungswinkel β) vorgeklapptem Lehnenbeschlag 10. Der Gleiter wurde noch weiter zurückbewegt und das Lehnenschwenkgelenk GL dreht sich weiter auf seine verriegelte Position zu.

**Figur 17** zeigt in stark schematisierter Darstellung den Fahrzeugsitz F in einer der in Figur 16 gezeigten Stellung der Basisstruktur B entsprechenden Sitzsteilung.

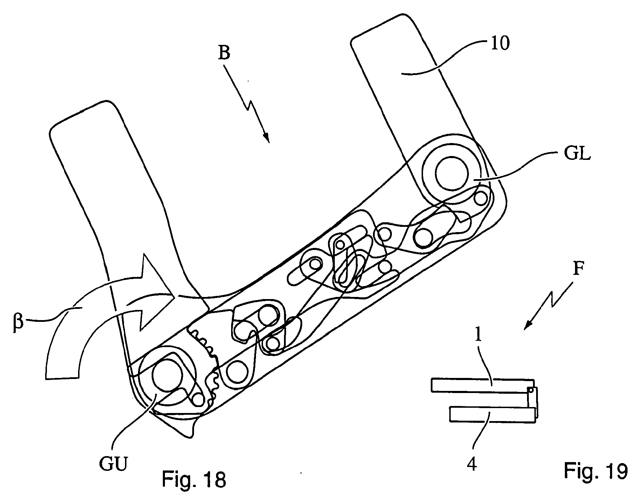

**Figur 18** zeigt die Basisstruktur B von Figur 16 mit in die waagerechte Endstellung weiter vorgeklapptem Lehnenbeschlag 10. Das Lehnenschwenkgelenk GL und das untere Schwenkgelenk GU sind nun jeweils in einer verriegelten Position verrastet.

Um die Verriegelung des Lehnenschwenkgelenks GL und des unteren Schwenkgelenks GU in dieser Endstellung des Fahrzeugsitzes F zu lösen, ist es erforderlich, dass der Nutzer beispielsweise manuell oder über irgendwelche Aktuatoren die Verriegelung des unteren Schwenkgelenkes GU löst, wonach der Sitz wieder in die Ausgangsstellung d.h. in die Gebrauchsstellung verstellt werden kann. Das obere Schwenkgelenk GL entriegelt sich bei der Rückwärtsbewegung der Rückenlehne selbsttätig.

**Figur 19** zeigt in stark schematisierter Darstellung den Fahrzeugsitz F in einer Sitzendstellung, die der in Figur 18 gezeigten Endstellung der Basisstruktur entspricht. Die arretierte Rückenlehne 1 ist nun annähernd waagerecht über dem Sitzteil 4 angeordnet. Die Vorderseite der Rückenlehne 1 und die Oberseite des Sitzteils 4 sind einander zugewandt.

### Figur 20

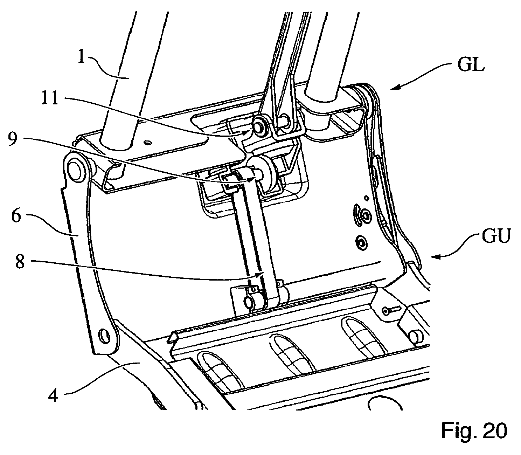

In Figur 20 ist eine bevorzugte oder ein zusätzlicher separater Gegenstand der vorliegenden Erfindung dargestellt, bei der die Rückenlehne 1 beim Vorklappen von der Gebrauchsstellung in die Verstaustellung verkürzt bzw. umgekehrt, verlängert wird. Durch Bewegen der Rückenlehne 1 nach vorne, insbesondere durch eine Drehung des zweiten Bauteils 6 um das untere Schwenkgelenk GU wird ein Kraftübertragungsmittel 8, hier ein Zahnriemen, angetrieben, der die Kraft oder das Drehmoment direkt oder indirekt auf ein Getriebe 9, hier ein Kegelradgetriebe. überträgt, das die Längenverstellung der Rückenlehne, 1 antreibt.

Bei dem erläuterten Ausführungsbeispiel gemäß den Figuren 1 -20 werden bei der Kinematik nur mechanische Bauteile eingesetzt. Dem Fachmann wird jedoch klar sein, dass die oben angesprochene, prinzipielle Funktionsweise der Erfindung selbstverständlich z.B. auch durch andere Vorrichtungen, wie z.B. durch ein mechatronisches System, umgesetzt werden kann.

### Bezugszeichenliste

- 1: erstes Bauteil, Rückenlehne
- 2: Zugarm
- 3: Löseorgan
- 4: Basisteil, Sitzteil
- 5: Gleitstrebe
- 6: zweites Bauteil, Zwischenteil
- 7: Rastmittel, Sperrnocken
- 8: Kraftübertragungsmittel, Zahnriemen
- 9: Getriebe
- 10: Lehnenbeschlag
- 11: Gelenk
- 30: Lösearm
- 31: Rastmittel, Sperrnocken
- 32: Sperrklaue
- 33: Anschlagnase
- 34: Verzahnung
- 35: Verzahnung
- 36: Sperrvertiefung
- 40: Beschlag
- B: Basisstruktur
- F: Fahrzeugsitz
- GL: erstes Drehmittel, Lehnenschwenkgelenk
- GU: zweites Drehmittel, Schwenkgelenk
- VL: Verriegelungseinrichtung des ersten Drehmittels
- VU: Verriegelungseinrichtung des zweiten Drehmittels
- α: Winkel zwischen dem ersten und dem zweiten Bauteil
- β: Winkel zwischen dem zweiten Bauteil und dem Basisteil

## Patentansprüche

1. Verfahren zur Verlagerung von einem ersten und einem zweiten Bauteil (1, 6) relativ zu einem Basisteil (4) von einer Gebrauchsstellung über eine Easy-Entry-Stellung in eine Verstaustellung, wobei als erstes Bauteil (1) eine Rückenlehne (1) und als Basisteil (4) ein Sitzteil (4) eines Fahrzeugsitzes vorgesehen wird, wobei das erste und das zweite Bauteil (1, 6) durch ein erstes Drehmittel (GL) und das zweite Bauteil (6) und das Basisteil (4) durch ein zweites Drehmittel (GU) jeweils miteinander verbunden sind, wobei das erste und zweite Drehmittel (GL, GU) in Abhängigkeit von mindestens einer Stellung des ersten Bauteils (1) relativ zu dem zweiten Bauteil (6) und/oder des zweiten Bauteils (6) relativ zu dem Basisteil (4) automatisch ver- und entriegelt werden, **dadurch gekennzeichnet, dass** das erste Drehmittel (GL) in der Gebrauchsstellung der Rückenlehne (1) nicht verriegelt wird und dass durch eine mechanische Kopplung des ersten Drehmittels (GL) mit einem Zugarm (2) die Drehbewegung des ersten Drehmittels (GL) auf den Zugarm (2) übertragen wird, der eine Wirkverbindung zwischen einem Löseorgan (3) und dem ersten Drehmittel (GL) bereitstellt, wobei ein Steuerschlitz (20) des Zugarms (2) der beweglichen Führung des Löseorgans (3) dient und dadurch letztlich das Verschwenken eines um die Rückenlehne mitrotierenden Gelenkbeschlags (10) innerhalb eines bestimmten Schwenkbereiches für eine Komfortverstellung der Rückenlehne (1) erlaubt.

2. Verfahren nach Anspruch 1, **dadurch gekennzeichnet, dass** in einer ersten Stellung die Rückenlehne (1) relativ zu dem zweiten Bauteil verlagert, insbesondere um einen Winkel (α) gedreht, wird und das zweite Bauteil relativ zu dem Sitzteil in einer ersten Position verriegelt bleibt.

3. Verfahren nach Anspruch 1 oder 2, **dadurch gekennzeichnet, dass** bei einer Drehung der Rückenlehne (1) über einen bestimmten Winkel (α) hinaus das zweite Drehmittel (GU) automatisch entriegelt wird und/oder die Rückenlehne (1) mit einem an dem zweiten Bauteil (6) vorgesehenen Anschlag zur Anlage gebracht wird.

4. Verfahren nach Anspruch 3, **dadurch gekennzeichnet, dass** bei einer Relativbewegung zwischen dem zweiten Bauteil (6) und dem Sitzteil (4), ein Verriegelungsmittel (VL) der Rückenlehne (1) automatisch in eine verriegelbare Position gebracht wird.

5. Verfahren nach Anspruch 4, **dadurch gekennzeichnet, dass** ein Verriegelungsmittel (VU) des zweiten Bauteils (6) ebenfalls, vorzugsweise gleichzeitig mit dem Verriegelungsmittel der Rückenlehne (1), automatisch in eine verriegelbare, zweite Position gebracht wird.

6. Verfahren nach Anspruch 5, **dadurch gekennzeichnet, dass** beide Bauteile (1, 6) automatisch in ihrer jeweiligen Position verriegelt werden, nachdem die Rückenlehne (1) ihre Endposition erreicht hat.

7. Verfahren nach einem der voranstehenden Ansprüche, **dadurch gekennzeichnet, dass** die Verriegelung durch ein Rastmittel, insbesondere eine Rastklinke erfolgt.

8. Verfahren nach Anspruch 6 oder 7, **dadurch gekennzeichnet, dass** das zweite Bauteil (6) manuell oder motorisch entriegelt wird.

9. Verfahren nach Anspruch 8, **dadurch gekennzeichnet, dass** bei einer Bewegung des zweiten Bauteils (6) und des Sitzteils (4) relativ zueinander, die Verriegelung der Rückenlehne (1) automatisch erfolgt.

10. Verfahren nach einem der voranstehenden Ansprüche, **dadurch gekennzeichnet, dass** bei einer Bewegung der Rückenlehne (1) und des zweiten Bauteils (6) relativ zueinander und/oder bei einer Bewegung des zweiten Bauteils (6) relativ zu dem Sitzteil (4) die Rückenlehne (1) automatisch verkürzt oder verlängert wird.

11. Fahrzeugsitz mit einer Rückenlehne (1), einem Zwischenteil (6), und einem Sitzteil (4) als ein Basisteil (4), wobei der Fahrzeugsitz von einer Gebrauchsstellung über eine Easy-Entry-Stellung in eine Verstaustellung verstellbar ist, wobei die Rückenlehne (1) und das Zwischenteil (6) durch eine erstes Drehmittel (GL) und das Zwischenteil (6) und das Sitzteil (4) durch ein zweites Drehmittel (GU) jeweils miteinander verbunden sind, die jeweils mit einem Verriegelungsmittel (VL, VU) in mindestens einer Position verriegelbar sind, wobei die Verriegelungsmittel (VL, VU) durch ein Mittel (5) so wirkverbunden sind, dass sich bei einer Relativbewegung (α, β) zwischen der Rückenlehne (1) und dem Zwischenteil (6) und/oder dem Zwischenteil (6) und dem Basisteil (4) mindesten ein Verriegelungsmittel (VL, VU) automatisch ver- und entriegelt, **dadurch gekennzeichnet, dass** das erste Drehmittel (GL) in der Gebrauchsstellung der Rückenlehne (1) nicht durch das Verriegelungsmittel (VL) verriegelt ist und dass das erste Drehmittel (GL) mit einem Zugarm (2) mechanisch derart gekoppelt ist, dass die Drehbewegung des ersten Drehmittels (GL) auf den Zugarm übertragen wird, der eine Wirkverbindung zwischen einem Löseorgan (3) und dem ersten Drehmittel (GL) bereitstellt, wobei ein Steuerschlitz (20) des Zugarms (2) der beweglichen Führung des Löseorgans (3) dient und dadurch letztlich das Verschwenken eines um die Rückenlehne mitrotierenden Gelenkbeschlags (10) innerhalb eines bestimmten Schwenkbereiches für eine Komfortverstellung der Rückenlehne (1) erlaubt.

12. Fahrzeugsitz nach Anspruch 11, **dadurch gekennzeichnet**, sich das Mittel (5) rein translatorisch bewegt.

## Claims

1. Method for shifting a first and a second component (1, 6) relative to a base part (4) from a use position via an easy entry position to a stowed position, wherein a seatback (1) is provided as the first component (1) and a seat part (4) of a vehicle seat is provided as the base part (4), wherein the first and the second component (1, 6) are in each case connected to each other by a first rotational means (GL) and the second component (6) and the base part (4) are in each case connected to each other by a second rotational means (GU), wherein the first and second rotational means (GL, GU) are automatically locked and unlocked depending on at least one position of the first component (1) relative to the second component (6) and/or of the second component (6) relative to the base part (4), **characterized in that** the first rotational means (GL) is not locked when the seatback (1) is in the use position, and **in that**, by way of a mechanical coupling of the first rotational means (GL) to a pull arm (2), the rotational movement of the first rotational means (GL) is transmitted to the pull arm (2), which provides an operative connection between a release member (3) and the first rotational means (GL), wherein a control slot (20) of the pull arm (2) serves for the movable guidance of the release member (3) and thus permits ultimately the pivoting of a joint fitting (10), which rotates together with the seatback, within a specific pivoting range for a comfort adjustment of the seatback (1).

2. Method according to Claim 1, **characterized in that** in a first position the seatback (1) is shifted, in particular by an angle (α), relative to the second component and the second component remains locked in a first position relative to the seat part.

3. Method according to Claim 1 or 2, **characterized in that** when rotating the seatback (1) beyond a specific angle (α), the second rotational means (GU) is automatically unlocked and/or the seatback (1) is brought into contact with a stop provided on the second component (6).

4. Method according to Claim 3, **characterized in that** with a relative movement between the second component (6) and the seat part (4), a locking means (VL) of the seatback (1) is automatically brought into a lockable position.

5. Method according to Claim 4, **characterized in that** a locking means (VU) of the second component (6) is also automatically brought into a lockable second position, preferably at the same time as the locking means of the seatback (1).

6. Method according to Claim 5, **characterized in that** both components (1, 6) are automatically locked in their respective positions after the seatback (1) has reached its end position.

7. Method according to one of the preceding claims, **characterized in that** the locking takes place by a latching means, in particular a latching pawl.

8. Method according to Claim 6 or 7, **characterized in that** the second component (6) is unlocked in a manual or motorized manner.

9. Method according to Claim 8, **characterized in that** the locking of the seatback (1) takes place automatically with a movement of the second component (6) and the seat part (4) relative to one another.

10. Method according to one of the preceding claims, **characterized in that** with a movement of the seatback (1) and the second component (6) relative to one another, and/or with a movement of the second component (6) relative to the seat part (4), the seatback (1) is automatically shortened or lengthened.

11. Vehicle seat comprising a seatback (1), an intermediate part (6) and a seat part (4) as a base part (4), wherein the vehicle seat can be adjusted from a use position via an easy position to a stowed position, wherein the seatback (1) and the intermediate part (6) are in each case connected to each other by a first rotational means (GL) and the intermediate part (6) and the seat part (4) are in each case connected to each other by a second rotational means (GU), which in each case are able to be locked in at least one position by a locking means (VL, VU), wherein the locking means (VL, VU) are operatively connected by a means (5) so that with a relative movement (α, β) between the seatback (1) and the intermediate part (6), and/or the intermediate part (6) and the base part (4), at least one locking means (VL, VU) is automatically locked and unlocked, **characterized in that** the first rotational means (GL) is not locked by the locking means (VL) when the seatback (1) is in the use position, and **in that** the first rotational means (GL) is mechanically coupled to a pull arm (2) such that the rotational movement of the first rotational means (GL) is transmitted to the pull arm, which provides an operative connection between a release member (3) and the first rotational means (GL), wherein a control slot (20) of the pull arm (2) serves for the movable guidance of the release member (3) and thus permits ultimately the pivoting of a joint fitting (10), which rotates together with the seatback, within a specific pivoting range for a comfort adjustment of the seatback (1).

12. Vehicle seat according to Claim 11, **characterized in that** the means (5) are moved in a purely translatory manner.

## Revendications

1. Procédé destiné à transférer un premier et un deuxième élément constitutif (1, 6) par rapport à un élément de base (4) d'une position d'utilisation par l'intermédiaire d'une position « Easy-Entry » dans une position de rangement, en temps que premier élément constitutif (1) étant prévu un dossier (1) et en tant qu'élément de base (4) étant prévue une assise (4) d'un siège de véhicule automobile, le premier et le deuxième éléments constitutifs (1, 6) par un premier élément rotatif (GL), le deuxième élément constitutif (6) et l'élément de base (4) par un deuxième élément rotatif (GU) étant respectivement reliés ensemble, le premier et le deuxième moyen rotatif (GL, GU) étant verrouillés et déverrouillés automatiquement en fonction d'au moins une position du premier élément constitutif (1) par rapport au deuxième élément constitutif (6) et/ou du deuxième élément constitutif (6) par rapport à l'élément de base (4), **caractérisé en ce que** dans la position d'utilisation du dossier (1), le premier moyen rotatif (GL) ne se verrouille pas et **en ce que** par un couplage mécanique du premier moyen de rotation (GL) avec un bras de traction (2), le déplacement en rotation du premier moyen de rotation (GL) est transmis sur le bras de traction (2) qui met à disposition une liaison active entre un organe de desserrage (3) et le premier moyen de rotation (GL), une encoche de commande (20) du bras de traction (2) servant au guidage mobile de l'organe de desserrage (3) et de ce fait, en finalité, permettant le pivotement d'une ferrure articulée (10) en co-rotation autour du dossier dans une certaine plage de pivotement pour un réglage de confort du dossier (1).

2. Procédé selon la revendication 1, **caractérisé en ce que** dans une première position, le dossier (1) reste déplacé par rapport au deuxième élément constitutif, notamment tourné de la valeur d'un angle (α) et le deuxième élément constitutif reste verrouillé dans une première position par rapport à l'assise.

3. Procédé selon la revendication 1 ou la revendication 2, **caractérisé en ce que** lors d'une rotation du dossier (1) au-delà d'un certain angle (α), le deuxième moyen de rotation (GU) se déverrouille automatiquement et/ou le dossier (1) est amené en appui sur une butée prévue sur le deuxième élément constitutif (6).

4. Procédé selon la revendication 3, **caractérisé en ce que** lors d'un déplacement relatif entre le deuxième élément constitutif (6) et l'assise (4), un moyen de verrouillage (VL) du dossier (1) est amené automatiquement dans une position verrouillable.

5. Procédé selon la revendication 4, **caractérisé en ce qu'**un moyen de verrouillage (VU) du deuxième élément constitutif (6) également, de préférence simultanément avec le moyen de verrouillage du dossier (1) est amené automatiquement dans une deuxième position verrouillable.

6. Procédé selon la revendication 5, **caractérisé en ce que** les deux éléments constitutifs (1, 6) se verrouillent automatiquement dans leur position respective après que le dossier (1) a atteint sa position finale.

7. Procédé selon l'une quelconque des revendications précédentes, **caractérisé en ce que** le verrouillage s'effectue par un moyen d'enclenchement, notamment un cliquet d'enclenchement.

8. Procédé selon la revendication 6 ou la revendication 7, **caractérisé en ce que** le deuxième élément constitutif (6) se déverrouille manuellement ou par moteur.

9. Procédé selon la revendication 8, **caractérisé en ce que** lors d'un déplacement du deuxième élément constitutif (6) et de l'assise (4) l'un par rapport à l'autre, le verrouillage du dossier (1) s'effectue automatiquement

10. Procédé selon l'une quelconque des revendications précédentes, **caractérisé en ce que** lors d'un déplacement du dossier (1) et du deuxième élément constitutif (6) l'un par rapport à l'autre et/ou lors d'un déplacement du deuxième élément constitutif (6) par rapport à l'assise (4), le dossier (1) se raccourcit ou se rallonge automatiquement.

11. Siège de véhicule avec un dossier (1), un élément intermédiaire (6) et une assise (4) en tant qu'un élément de base (4), le siège de véhicule étant réglable d'une position d'utilisation, par l'intermédiaire d'une position « Easy-Entry » dans une position de rangement, le dossier (1) et l'élément intermédiaire (6) par un premier moyen de rotation (GL) et l'élément intermédiaire (6) et l'assise (4) par un deuxième élément rotatif (GU) étant respectivement reliés l'un à l'autre, qui sont à chaque fois verrouillables par un moyen de verrouillage (VL, VU) dans au moins une position, les moyens de verrouillage (VL, VU) étant en liaison active par un moyen (5), de sorte que lors d'un déplacement relatif (α, β) entre le dossier (1) et l'élément intermédiaire (6) et/ou entre l'élément intermédiaire (6) et l'élément de base (4), au moins un moyen de verrouillage (VL, VU) se verrouillent et se déverrouillent automatiquement, **caractérisé en ce que** dans la position d'utilisation du dossier (1), le premier moyen de rotation (GL) n'est pas verrouillé par le moyen de verrouillage (VL) et **en ce que** le premier moyen de rotation (GL) est mécaniquement couplé avec un bras de traction (2), de telle sorte que le déplacement en rotation du premier moyen de rotation (GL) se transmet sur le bras de traction, qui met à disposition une liaison active entre un organe de desserrage (3) et le premier moyen de rotation (GL), une encoche de commande (20) du bras de traction (2) servant au guidage mobile de l'organe de desserrage (3) et de ce fait permettant en finalité le pivotement d'une ferrure articulée (10) en co-rotation autour du dossier dans une certaine plage de rotation pour un réglage de confort du dossier (1).

12. Siège de véhicule selon la revendication 11, caractérisé en ce le moyen (5) se déplace purement en translation.
